# EUROPÄISCHE PATENTSCHRIFT

(11) **EP 2 675 765 B1**
(45) Veröffentlichungstag und Bekanntmachung des Hinweises auf die Patenterteilung: **06.11.2019**
(21) Anmeldenummer: 12705068.0
(22) Anmeldetag: 17.02.2012
(51) Int. Cl.: C03C 29/00, C03C 3/19, C03C 4/20, C03C 8/24, H01M 2/06, B23K 15/00, B23K 26/32, C03C 8/00, C03C 27/02, H01M 2/24, H01M 2/30, H01M 10/0525, H01M 2/08, H01M 10/0569, B23K 101/36, B23K 103/10, B23K 1/19

(54) **DURCHFÜHRUNG, INSBESONDERE FÜR BATTERIEN UND VERFAHREN ZUM EINBRINGEN DER DURCHFÜHRUNG MITTELS ULTRASCHALLSCHWEIßEN IN EIN GEHÄUSE**
FEED-THROUGH, IN PARTICULAR FOR BATTERIES AND METHOD FOR INTEGRATING SAID FEED-THROUGH IN A HOUSING BY MEANS OF ULTRASONIC WELDING
PASSAGE DESTINÉ EN PARTICULIER À DES BATTERIES ET PROCÉDÉ POUR INTÉGRER CE PASSAGE DANS UN BOÎTIER PAR SOUDAGE PAR ULTRASONS

(30) Priorität: 18.02.2011 DE 102011011705; 25.02.2011 DE 102011012430; 01.04.2011 DE 102011015869; 10.06.2011 DE 102011103975; 10.06.2011 DE 102011103976; 07.07.2011 DE 102011106873
(43) Veröffentlichungstag der Anmeldung: 25.12.2013
(73) Patentinhaber: Schott AG, 55122 Mainz (DE)
(72) Erfinder: KROLL, Frank, 84036 Landshut (DE); HARTL, Helmut, A-1210 Wien (AT); ROTERS, Andreas, 55118 Mainz (DE); ESEMANN, Hauke, 55286 Woerrstadt (DE); GOEDEKE, Dieter, 65812 Bad Soden (DE); DAHLMANN, Ulf, 55239 Gau-Odernheim (DE); PICHLER-WILHELM, Sabine, 84028 Landshut (DE); LANDENDINGER, Martin, 84061 Ergoldsbach (DE); BACKNAES, Linda, Johanna, 84036 Landshut (DE)
(74) Vertreter: Sawodny, Michael-Wolfgang
(86) Internationale Anmeldenummer: PCT/EP2012/000701
(87) Internationale Veröffentlichungsnummer: WO 2012/110245

(56) Entgegenhaltungen:
- WO-A2-2010/010103
- US-A- 5 262 364
- US-A1- 2003 134 194
- DATABASE WPI Week 198431 7. Dezember 1983 (1983-12-07) Thomson Scientific, London, GB; AN 1984-194386 XP002677543, -& SU 1 058 909 A1 (KOSTANYAN K A) 7. Dezember 1983 (1983-12-07)
- Various: "Ultrasonic Welding", Wikipedia , 3 February 2011 (2011-02-03), XP055332216, Retrieved from the Internet: URL:https://en.wikipedia.org/wiki/Ultrason ic_welding?oldid=411732654 [retrieved on 2017-01-04]

## Beschreibung

Die Erfindung betrifft eine Durchführung durch ein Gehäusebauteil eines Gehäuses, insbesondere eines Batteriezellengehäuses, wobei das Gehäusebauteil wenigstens eine Öffnung aufweist, durch die wenigstens ein Leiter, insbesondere ein im Wesentlichen stiftförmiger Leiter hindurchgeführt wird. Des Weiteren betrifft die Erfindung ein Gehäuse, insbesondere für eine Batteriezelle, mit einer Durchführung sowie ein Verfahren zum Versehen eines Gehäusebauteils mit einer Durchführung und eine elektrische Speichereinrichtung, insbesondere einen Akkumulator mit einem Batteriezellengehäuse, wobei das Batteriezellengehäuse wenigstens eine Öffnung mit einer Durchführung aufweist. Gemäß dem Stand der Technik werden elektrische Durchführungen wie beispielsweise in den Anmeldungen
US 5,243,492
US 7,770,520
US 2010/0064923
EP 1 061 325 sowie
DE 10 2007 016692
beschrieben unter Verwendung von Lotgläsern als Isolator hergestellt. Bei sämtlichen aus dem Stand der Technik bekannten Durchführungen wurde ein im Wesentlichen stiftförmiger Leiter mit dem jeweiligen Gehäusebauteil durch Aufschmelzen eines niedrig schmelzenden Glases verbunden. Nachteilig dabei war, dass die thermische Stabilität der metallischen Werkstoffe, insbesondere deren Schmelzpunkt, die maximal mögliche Schmelztemperatur für das verwendete Glaslot begrenzt hatte. Des Weiteren war es erforderlich, dass das geschmolzene Glaslot die verwendeten Materialien der Bauteile gut benetzte, um die erforderliche Dichtigkeit und mechanische Stabilität zu gewährleisten. Ein weiteres Erfordernis war, dass im allgemeinen das Glaslot für die Mehrzahl der Durchführungen so ausgewählt werden musste, dass die thermische Ausdehnungen der Komponenten nicht so stark voneinander
abweichten. Eine Ausnahme hiervon bilden lediglich Druckglasdurchführungen beziehungsweise Druckeinglasungen als Spezialeinglasungen, bei denen unterschiedliche thermische Ausdehnungen von Glas- oder Glaskeramikmaterial und umgebendem Metall zu einer kraftschlüssigen bzw. reibschlüssigen Verbindung von Glas- oder Glaskeramikmaterial und umgebendem Metall führen. Angewandt werden derartige Druckglasdurchführungen beispielsweise bei Durchführungen für Airbag-Zünder. Bei Druckglasdurchführungen haftet zwar das Glas- oder Glaskeramikmaterial an dem umgebenden Metall an, es besteht jedoch keine molekulare Verbindung zwischen dem Glas- oder Glaskeramikmaterial und dem Metall. Der Kraftschluss geht verloren, sobald die durch die Haftreibung bewirkte Gegenkraft überschritten wird.

Aus der DE 10 006 199 ist bekannt geworden, einen Formkörper aus sprödbrüchigem Material, insbesondere aus Glas, mit einer Öffnung mit einem Verschlusskörper hermetisch dicht zu verschließen, wobei Formkörper und Verschlusskörper dauerhaft miteinander verschweißt werden. Der Formkörper gemäß der DE 10 006 199 besteht bevorzugt aus einem Glas, einer Glaskeramik oder einer Keramik, und der Verschlusskörper bevorzugt aus einem Metall, einer Metalllegierung oder einem Metallverbundwerkstoff. Hierbei ist die thermische Ausdehnung von Formkörper und Verschlusskörper angepasst. Nicht gezeigt in der DE 10 006 199 ist eine elektrische Durchführung.

Aus der DE 1 496 614 ist ebenfalls die Verbindung eines Metallstreifens mit einem optischen Element, umfassend bevorzugt ein Glas- oder ein Glaskeramikmaterial mittels Ultraschallschweißen, bekannt geworden. Als Material für das zu verbindende Metall ist in der DE 1 496 614 bevorzugt eine Aluminiumlegierung gezeigt.

Auch in der DE 1 496 614 ist keine Durchführung dargestellt.

Akkumulatoren, bevorzugt Lithium-Ionen-Batterien, sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydridbatterien ersetzen.

Als Batterien im Sinne der Erfindung wird sowohl eine Einwegbatterie, die nach ihrer Entladung entsorgt und/oder recycelt wird, als auch ein Akkumulator verstanden.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Batterien sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Lithium-Ionen-Batterien, insbesondere für Anwendungen in einer Automobil-Umgebung weisen in der Regel eine Vielzahl von einzelnen Batteriezellen auf, die miteinander in Serie geschaltet werden. Die miteinander in Reihe bzw. in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden.

Insbesondere für die Anwendung von Lithium-Ionen-Batterien in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batteriezellen über einen langen Zeitraum. Die Dichtheit beeinträchtigen können z. B. Undichtigkeit im Bereich der Elektroden der Batteriezelle beziehungsweise der Elektrodendurchführung der Batteriezelle. Derartige Undichtigkeiten können beispielsweise hervorgerufen werden durch Temperaturwechselbelastungen und mechanische Wechselbelastungen, wie beispielsweise Vibrationen im Fahrzeug oder die Alterung des Kunststoffes. Ein Kurzschluss oder Temperaturänderungen der Batterie beziehungsweise Batteriezelle kann zu einer verminderten Lebensdauer der Batterie beziehungsweise Batteriezelle führen.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss beziehungsweise die Elektroden sind durch einen Kunststoff isoliert. Nachteilig an den Kunststoffisolierungen sind die limitierte Temperaturbeständigkeit, die begrenzte mechanische Beständigkeit, die Alterung und die unsichere Dichtheit über der Lebensdauer. Die Stromdurchführungen sind bei den Lithium-Ionen-Batterien gemäß dem Stand der Technik somit nicht hermetisch dicht in beispielsweise das Deckelteil der Li-Ionen-Batterie eingebaut. Des Weiteren sind die Elektroden verquetschte und lasergeschweißte Verbindungsbauteile mit zusätzlichen Isolatoren im Innenraum der Batterie.

Aus der DE 27 33 948 A1 ist eine Alkalibatterie bekanntgeworden, bei der ein Isolator wie z. B. Glas oder Keramik unmittelbar durch eine Schmelzverbindung mit einem Metallteil verbunden ist.

Eines der Metallteile ist elektrisch mit einer Anode der Alkalibatterie und das andere elektrisch mit einer Kathode der Alkalibatterie verbunden. Bei den in der DE 27 33 948 A1 verwandten Metallen handelt es sich um Eisen oder Stahl. Leichtmetalle wie Aluminium sind in der DE 27 33 948 A1 nicht beschrieben. Auch die Verschmelztemperatur des Glas- oder Keramikmaterials ist in der DE 27 33 948 A1 nicht angegeben. Bei der in der DE 27 33 948 A1 beschriebenen Alkalibatterie handelt es sich um eine Batterie mit einem alkalischen Elektrolyten, der gemäß der DE 27 33 948 A1 Natriumhydroxid oder Kaliumhydroxyt enthält. Eine Erwärmung von Li-Ionen-Batterien findet sich in der DE 27 33 948 A1 nicht.

Aus der DE 698 04 378 T2 bzw. der EP 0 885 874 B1 ist ein Verfahren zur Herstellung von asymmetrischen organischen Carbonsäureestern und zur Herstellung von wasserfreien organischen Elektrolyten für Alkali-Ionen-Batterien bekanntgeworden. Auch Elektrolyte für wiederaufladbare Lithium-Ionenzellen sind in der DE 698 04 378 T2 bzw. EP 0 885 874 B1 beschrieben.

Die DE 699 23 805 T2 bzw. EP 0 954 045 B1 beschriebt eine RF-Durchführung mit verbesserter elektrischer Wirksamkeit. Bei den aus der EP 0 954 045 B1 bekannten Durchführungen handelt es sich nicht um eine Glas-Metall-Durchführung. In der EP 0 954 045 B1 werden Glas-Metall-Durchführungen, die unmittelbar innerhalb beispielsweise der Metallwand einer Verpackung ausgebildet werden als nachteilig beschrieben, da derartige RF-Durchführungen auf Grund der Versprödung des Glases nicht dauerhaft sind.

Die DE 690 230 71 T2 bzw. EP 0 412 655 B1 beschreibt eine Glas-Metall-Durchführung für Batterien oder andere elektrochemische Zellen, wobei als Gläser Gläser mit einem SiO₂-Gehalt von ungefähr 45 Gew.-% verwandt werden und als Metalle, insbesondere Legierungen verwandt werden, die Molybdän und/oder Chrom und/oder Nickel umfassen, verwandt werden. Die Verwendung von Leichtmetallen ist in der DE 690 23 071 T2 ebenso wenig beschrieben wie Verschmelztemperaturen bzw. Verschmelzungstemperaturen für die verwandten Gläser. Auch die Materialien für die stiftförmigen Leiter sind gemäß DE 690230 71 T2 bzw. EP 0 412 655 B1 Legierungen, die Molybdän, Niob oder Tantal umfassen.

Aus der US 7,687,200 ist eine Glas-Metall-Durchführung für Lithium-Ionen-Batterien bekannt geworden. Gemäß der US 7,687,200 war das Gehäuse aus Edelstahl und der stiftförmige Leiter aus Platin/Iridium. Als Glasmaterialien sind in der US 7,687,200 die Gläser TA23 und CABAL-12 angegeben. Gemäß der US 5,015,530 handelt es sich dabei um CaO-MgO-Al₂O₃-B₂O₃-Systeme mit Verschmelztemperaturen von 1025° C bzw. 800° C. Des Weiteren sind aus der US 5,015,530 Glaszusammensetzungen für Glas-Metall-Durchführungen für Lithium-Batterien bekannt geworden, die CaO, Al₂O₃, B₂O₃, SrO und BaO umfassen, deren Verschmelztemperaturen im Bereich 650° C - 750° C liegen und damit zu hoch für eine Verwendung zusammen mit Leichtmetallen

Darüber hinaus ist Barium in vielen Anwendungen unerwünscht, da es als umweltschädlich und gesundheitsgefährdend erachtet wird. Ebenso in der Diskussion ist Strontium, auf dessen Einsatz zukünftig ebenfalls verzichtet werden sollte.

Des Weiteren weisen die Glaszusammensetzungen gemäß der US 7,687,200 einen Ausdehnungskoeffizient α im Temperaturbereich von 20° C bis 300° C von lediglich α ≈ 9 · 10⁻⁶/K auf.

Aus der US 2003/134194A1 ist eine hermetisch dichte Durchführung für eine Lithium-Ionen-Batterie für medizinische Vorrichtung bekannt geworden. Ein Leiter wird gemäß der US 2003/134194A1 in eine Öffnung eines Aluminiumgehäuses eingeglast. Als Glasmaterial findet das Phosphatglas ALSG-32 Verwendung.

Die US 2003/134194A1 zitiert die US 5,851,222A, die Stifte für Lithium-Batterien beschreibt, die US 5.015,530A und die US 5,821,011A, die eine Glas-Metall-Durchführung für Lithium-Elektrolytumgebungen zeigt. Gläser für Duchführungen sind gemäß US 2003/134194A1 beschrieben in US 4,202,700A und US 4,455,384A.

Aufgabe der Erfindung ist es, die Nachteile des Standes der Technik, wie oben beschrieben, zu vermeiden und eine einfach herzustellende elektrische Durchführung anzugeben, die insbesondere auch in einem Batteriezellengehäuse Verwendung finden kann. Des Weiteren soll sich die Durchführung durch ein hohes Maß an Beständigkeit auszeichnen.

Erfindungsgemäß wird die Aufgabe durch eine Durchführung durch ein Gehäusebauteil eines Gehäuses, insbesondere eines Batteriegehäuses, gemäß Anspruch 1 und ein Verfahren gemäß den Ansprüchen 12 oder 13 gelöst. Die Aufgabe wird ebenfalls durch ein Gehäuse gemäß Anspruch 8 oder durch eine elektrische Speichereinrichtung gemäß Anspruch 10 gelöst.

Das erfindungsgemäße Gehäusebauteil weist wenigstens eine Öffnung auf, durch die ein Leiter, bevorzugt ein im Wesentlichen stiftförmiger Leiter hindurchgeführt wird. Der Leiter, insbesondere der im Wesentlichen stiftförmige Leiter ist, von einem Isolator, insbesondere einem Glas- oder Glaskeramikmaterial wenigstens teilweise, umgeben. Die erfindungsgemäße Durchführung umfasst mindestens eine Verbindung des im Wesentlichen stiftförmigen Leiters und/oder des Gehäusebauteils mit dem Isolator, der insbesondere ein Glas- oder Glaskeramikmaterial ist, die eine Ultraschallschweißverbindung ist. Ultraschallschweißen ist eine Fügetechnologie, die insbesondere bei thermoplastischen und polymerverträglichen Kunststoffen zum Einsatz kommt, bevorzugt dann, wenn schnelle Prozesszeiten bei hoher Prozesssicherheit gefragt sind. Beim Ultraschallschweißen verursachen hochfrequente mechanische Schwingungen Molekular- und Grenzflächenreibung in einer Fügezone. Dabei entsteht die zum Schweißen notwendige Wärme und das Material wird plastifiziert. Nach der Ultraschall-Einwirkung wird durch kurze Abkühlzeiten unter Beibehaltung des Fügedrucks schließlich eine homogene Verfestigung der Fügezone erreicht. Zusätzlich beeinflussen kann zum Beispiel die Geometrie der Sonotrode sowie die Gestaltung der Fügezone das Schweißergebnis. Im Gegensatz zu Druckeinglasungen, bei denen lediglich eine kraftschlüssige Verbindung vorliegt, ist die verbindung zwischen dem Glasmaterial und dem Material, mit dem das Glasmaterial verbunden wird, eine chemische Bindung.

Die wesentlichen Eigenschaften des Ultraschall-Schweißens sind:
sehr schnelle Prozesszeiten sehr gute Prozesskontrolle und -sicherheit durch Überwachung der Schweißparameter, selektive Energiezufuhr mittels digitaler Steuerung des Schweißprozesses, konstante Schweißqualität mit optisch perfekten und stabilen sowie reproduzierbaren Schweißnähten und optisch ansprechende Schweißnahtgestaltung. Des Weiteren ist es möglich, beliebige Konturen, insbesondere auch beliebige geschlossene Konturen zweier Materialien miteinander zu verbinden. Vorteilhaft können kalte Schweißwerkzeuge eingesetzt werden, so dass keine Aufwärmzeiten der Maschine berücksichtigt werden müssen und ein schnelles und einfaches Wechseln der Schweißwerkzeuge ermöglicht wird. Des Weiteren sind die Schweißnähte sowohl luft- als auch flüssigkeitsdicht.

Durch die Ausgestaltung als Ultraschallschweißverbindung ist es möglich, Glas- oder Glaskeramikmaterialien zu verwenden, die höhere Verschmelztemperaturen aufweisen als beispielsweise die Schmelztemperaturen der Materialien des Gehäusebauteils. Dies ermöglicht die Auswahl von Gläsern oder Glaskeramikmaterialien, die in ihrem Benetzungsverhalten auf die verwendeten Materialien des Gehäusebauteils und/oder des Stifts abgestimmt sind. Aufgrund der guten Benetzbarkeit stellen die Glas- und/oder Glaskeramikmaterialien dann die notwendige Dichtigkeit und mechanische Stabilität zur Verfügung, wobei die Verschmelztemperatur des verwendeten Materials dann weitgehend frei gewählt werden kann.

Unter Verschmelztemperatur bzw. Verschmelzungstemperatur eines Glases oder einer Glaskeramik wird diejenige Temperatur des Glases oder der Glaskeramik verstanden, bei der das Glasmaterial erweicht und so an dem mit dem Glasmaterial zu verschmelzenden Metall dicht anliegt, so dass eine Fügeverbindung zwischen dem Glas oder der Glaskeramik und dem Metall erhalten wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1, erläutert. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas, beispielsweise in Form eines Glaspulvers, aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen, wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der sogenannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um
± 20 K von der Halbkugeltemperatur abweichen.

Die aus der DE 10 2009 011 182 A1 bekannt gewordenen Glaslote betreffen Hochtemperaturanwendungen, z. B. bei Brennstoffzellen.

Ein weiterer Vorteil der Verbindung von Isolator, insbesondere Glasmaterial mit dem umgebenden Material mit einer Schweißverbindung, insbesondere einer Ultraschweißverbindung gemäß der Erfindung ist darin zu sehen, dass die verwendeten Werkstoffe relativ frei gewählt werden können und eine Abstimmung, beispielsweise der thermischen Ausdehnungen der Komponenten, nicht mehr im Vordergrund steht. Dies ermöglicht es zum Beispiel, das Glas oder die Glaskeramik an den Elektrolyten der Batteriezelle anzupassen. Insbesondere können Materialien gewählt werden, die eine hohe Beständigkeit gegenüber den chemisch meist sehr aggressiven Elektrolyten aufweisen. Dies ist insbesondere dann der Fall, wenn sowohl die Verbindung des Isolators zum Grundkörper, als auch die Verbindung des Isolators zum im Wesentlichen stiftförmigen Leiter durch Ultraschallschweißen erfolgt. In einem solchen Fall könnte z. B. auch eine Glaskeramik oder Quarzglas als Material für den Isolator verwandt werden. Die Glaskeramik zeichnet sich durch eine hohe Festigkeit, hohe chemische Beständigkeit und einen niedrigen Ausdehnungskoeffizienten aus. Quarzglas weist eine sehr hohe Stabilität, insbesondere im Vergleich zu den meisten Schmelz- bzw. Lotgläsern auf.

In einer besonders bevorzugten Ausführungsform der Erfindung umfasst der stiftförmige Leiter ein Kopfteil und der Isolator, insbesondere das Glas- oder Glaskeramikmaterial, ist zwischen das Kopfteil und das Gehäusebauteil eingebracht. Bevorzugt ist das Glas- oder Glaskeramikmaterial ringförmig, beispielsweise ein Glasring. Bei einer derartigen Ausgestaltung eines stiftförmigen Leiters mit einem Kopfteil kann die Verschweißung zwischen dem aus beispielsweise Aluminium hergestellten, im Wesentlichen stiftförmigen Leiter mit Kopfteil und dem ringförmigen Material, beispielsweise dem Glasring vorgesehen sein. Die Ultraschallschweißverbindung kann aber auch zwischen dem Isolator und dem Gehäusebauteil, vorliegt. Sind beide Verbindungen Schweißverbindungen, so ergibt sich wie oben beschrieben, die größte Freiheit in der Materialwahl des Isolators. Die Ausgestaltung des stiftförmigen Leiters mit einem Kopfteil hat insbesondere Vorteile mit Blick auf den Bauraum, der innerhalb von Batteriezellen meist sehr knapp bemessen ist. Stiftförmige Leiter mit einem Kopfteil ermöglichen beispielsweise, dass die Kopffläche des Kopfteils, die in der Regel größer ist als die Kopffläche des stiftförmigen Leiters, ein Elektrodenverbindungsteil angeschlossen werden kann, das wiederum mit der Anode oder Kathode der Batteriezelle verbunden wird.

Die Elektrodenverbindungsteile beziehungsweise Elektrodenverbindungsbauteile können beispielsweise durch Schweißen, insbesondere Laserschweißen, Widerstandsschweißen, Elektronenstahlschweißen, Reibschweißen, Ultraschallschweißen, Bonden, Kleben, Löten, Verstemmen, Schrumpfen, Verpressen, Verklemmen und Quetschen stoffschlüssig mit dem Kopfteil verbunden werden.

Als Materialien für den Leiter, bevorzugt den stiftförmigen Leiter, finden bevorzugt Metalle, insbesondere Cu, CuSiC oder Kupferlegierungen, Al oder AlSiC oder Aluminiumlegierungen, Mg oder Magnesiumlegierungen, Gold oder Goldlegierungen, Silber oder Silberlegierungen, NiFe, ein NiFe-Mantel mit Kupferinnenteil sowie eine Kobald-Eisen-Legierung Verwendung.

Als Aluminium bzw. Aluminiumlegierung finden bevorzugt Verwendung:
EN AW-1050 A
EN AW-1350
EN AW-2014
EN AW-3003
EN AW-4032
EN AW-5019
EN AW-5056
EN AW-5083
EN AW-5556A
EN AW-6060
EN AW-6061.

Als Kupfer bzw. Kupferlegierungen finden bevorzugt Verwendung:
Cu-PHC 2.0070
Cu-OF 2.0070
Cu-ETP 2.0065
Cu-HCP 2.0070
Cu-DHP 2.0090

Bevorzugt werden in einer Ausgestaltung als Glas- oder Glaskeramikmaterial derartige Materialien ausgewählt, die eine Verschmelztemperatur aufweisen, die geringer ist als die Schmelztemperatur des Leiters, insbesondere des stiftförmigen Leiters und/oder des Gehäusebauteils. Besonders bevorzugt ist die Verwendung von Leichtmetallen für stiftförmige Leiter, insbesondere aber die Materialien des Gehäusebauteils.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise dem stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶S/m bis 50 · 10⁶S/ aus.

Bei Einsatz in Druckglasdurchführungen liegt zudem noch der Ausdehnungskoeffizient α für den Bereich 20° C bis 300° C im Bereich 18 · 10⁻⁶/K bis 30 · 10⁻⁶/K.

Im Allgemeinen haben Leichtmetalle Schmelztemperaturen im Bereich 350° C bis 800° C.

Bevorzugte Glaszusammensetzungen, die eingesetzt werden können, umfassen die nachfolgenden Komponenten in mol-%:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Ganz besonders bevorzugt ist eine Zusammensetzung, die nachfolgende Komponenten umfasst:

| | |
|---|---|
| P₂O₅ | 38-50 mol-%, insbesondere 39-48 mol.-% |
| Al₂O₃ | 3-14 mol-%, insbesondere 4-12 mol.-% |
| B₂O₃ | 4-10 mol-%, insbesondere 4-8 mol.-% |
| Na₂O | 10-30 mol-%, insbesondere 14-20 mol.-% |
| K₂O | 10-20 mol-%, insbesondere 12-19 mol.-% |
| PbO | 0-10 mol.-%, insbesondere 0-9 mol.-% |

Die zuvor angegebene Glaszusammensetzung zeichnet sich nicht nur durch eine niedrige Verschmelztemperatur und ein niedriges Tg aus, sondern auch dadurch, dass sie gegenüber Batterie-Elektrolyten, wie sie beispielsweise in LiIonenbatterien Verwendung finden, eine ausreichend hohe Beständigkeit aufweisen und insoweit die geforderte Langzeitbeständigkeit gewährleisten.

Bei den als bevorzugt angegebenen Glasmaterialien handelt es sich um stabile Phosphatgläser, die einen deutlich niedrigeren Gesamtalkaligehalt als bekannte Alkali-Phosphat-Gläser aufweisen.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bis 20 mol-% Na₂O bzw. natriumfreie Gläser besonders beständig gegenüber Elektrolyten, insbesondere solchen, wie sie in Li-Ionen-Speichereinrichtungen verwandt werden, sind.

Die Beständigkeit der Glaszusammensetzung gegenüber den Batterie-Elektrolyten kann dadurch geprüft werden, dass die Glaszusammensetzung in Form eines Glaspulvers mit einer Körnung d50 = 10 µm gemahlen wird und in den Elektrolyten für eine vorbestimmte Zeit, beispielsweise eine Woche, ausgelaugt wird. D50 bedeutet, dass 50 % aller Partikel oder Körner des Glaspulvers kleiner oder gleich einem Durchmesser von 10 µm ist. Als nicht wässriger Elektrolyt wird beispielsweise eine Carbonatmischung aus Ethylencarbonat und Dimethylcarbonat im Verhältnis 1:1 1 M LiPF₆ als Leitsalz verwandt. Nachdem das Glaspulver dem Elektrolyten ausgesetzt war, kann das Glaspulver abfiltriert und der Elektrolyt auf Glasbestandteile, die aus dem Glas ausgelaugt wurden, untersucht werden. Hierbei hat sich herausgestellt, dass bei den Phosphatgläsern in den zuvor beschriebenen Zusammensetzungsbereichen überraschenderweise eine derartige Auslaugung in nur geringem Maß von weniger als 20 Massenprozent vorliegt, in besonderen Fällen auch eine Auslaugung < 5 Massenprozent erreicht wird. Des Weiteren zeigen derartige Glaszusammensetzungen eine thermische Ausdehnung a(20° C - 300°C) > 14 ·10⁻⁶/K, insbesondere zwischen 15 ·10⁻⁶/K und 25 · 10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Neben der Durchführung durch ein Gehäusebauteil wird ein Gehäuse, insbesondere ein Batteriezellengehäuse, beispielsweise ein Batteriedeckel, angegeben, der wenigstens eine Durchführung gemäß der Erfindung umfasst, sowie eine Speichereinrichtung, insbesondere eine Batterie mit einer derartigen Durchführung. Neben der Durchführung und dem Gehäuse stellt die Erfindung auch ein Verfahren zum Versehen eines Gehäusebauteils mit einer Durchführung zur Verfügung. In einer ersten Ausgestaltung der Erfindung wird zunächst ein im Wesentlichen stiftförmiger Leiter mit einem Isolator, insbesondere einem Glas- oder Glaskeramikmaterial verschmolzen, ergebend die Durchführung. Die Durchführung wird dann mit dem Gehäusebauteil mittels Ultraschallschweißen verbunden, bevorzugt hermetisch dicht. Hierbei wird der im Wesentlichen stiftförmige Leiter der Durchführung durch eine Öffnung im Gehäusebauteil hindurchgeführt und die Durchführung nach Hindurchführung des Leiters, insbesondere des im Wesentlichen stiftförmigen Leiters durch das Gehäusebauteil durch Ultraschallschweißen mit dem Gehäusebauteil verbunden. Um beispielsweise bei bestimmten Materialien des Gehäusebauteils ein gutes Ergebnis des Schweißprozesses zu erhalten, kann vorgesehen sein, dass zwischen dem Isolator und dem Gehäusebauteil vor Verschweißen von Isolator und Gehäusebauteil ein Kontaktmaterial, beispielsweise eine Aluminiumfolie, eingebracht wird. Besonders bevorzugt ist es, wenn das Ultraschallschweißen beispielsweise mittels einer Torsionssonotrode erfolgt, und zwar von der Seite des Gehäusebauteils her.

Bevorzugt handelt es sich bei der Batterie um eine Lithium-Ionen-Batterie. Die Lithium-Ionen-Batterie weist bevorzugt einen nicht-wässrigen Elektrolyten, insbesondere auf Carbonatbasis, bevorzugt eine Carbonatmischung, auf. Die Carbonatmischung kann ein Ethylencarbonat in Mischung mit Dimethylcarbonat mit einem Leitsalz, beispielsweise LiPF₆, umfassen.

Das Material des Gehäusebauteils ist bevorzugt ein Metall, insbesondere ein Leichtmetall, wie beispielsweise Aluminium, AlSiC, eine Aluminiumlegierung, Magnesium oder eine Magnesiumlegierung. Sowohl für das Batteriegehäuse wie auch den Grundkörper können Titan- und/oder Titanlegierungen wie Ti6246 und/oder Ti6242 verwandt werden. Titan ist ein körperverträgliches Material, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise im Rennsport, aber auch für Luft- und Raumfahrtanwendungen.

Alternative Materialien für das Gehäusebauteil und/oder den Grundkörper sind auch Stahl, nichtrostender Stahl, Normalstahl oder Edelstahl.

Als Normalstahl wird insbesondere St35, St37 oder St38 verwandt. Besonders bevorzugte Edelstähle sind beispielsweise X1 CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2, insbesondere aber die Edelstähle mit der Werkstoff-Nummer (WNr.) 1.4301, 1.4302, 1.4303, 1.4304, 1.4305, 1.4306 sowie 1.4307 gemäß Euro-Norm (EN). Diese Edelstähle zeichnen sich durch ihre gute Schweißarbeit, insbesondere beim Laserschweißen oder Widerstandsschweißen aus sowie gute Tiefziehbarkeit.

Als Werkstoff können auch Automatenstähle, beispielsweise mit der Werkstoff-Nummer (WNr.) 1.0718, die über einen geeigneten Ausdehnungskoeffizienten verfügen und durch Drehen bearbeitet werden können oder Baustähle, beispielsweise mit der Werkstoff-Nummer (WNr.) 1.0338 eingesetzt, die durch Stanzen bearbeitet werden können und für das Gehäuse und/oder den Grundkörper verwandt werden.

Alternativ zum Verschweißen der fertigen Durchführung, d.h. des Isolators mit einem Teil des Gehäusebauteils, wie oben beschrieben, wäre es auch möglich, Isolator, insbesondere das Glas- oder Glaskeramikmaterial mit dem Gehäusebauteil gemäß dem Stand der Technik zu verschmelzen und anschließend an das Verschmelzen des Gehäusebauteils mit dem Glas- oder Glaskeramikmaterial den stiftförmigen Leiter durch Ultraschallschweißen mit dem Isolator zu verbinden, bevorzugt hermetisch dicht. Ein derartiges Verfahren ist insbesondere dann vorteilhaft, wenn der Leiter, insbesondere der stiftförmige Leiter ein Kopfteil aufweist, so dass der Kopfteil des stiftförmigen Leiters mit dem Glas- oder Glaskeramikmaterial durch Ultraschallschweißen verbunden werden kann.

Alternativ könnte sowohl der Isolator beziehungsweise die Glas- oder die Glaskeramik mit dem Gehäuseteil, wie auch der im Wesentlichen stiftförmige Leiter mit dem Isolator verschweißt werden, insbesondere durch Ultraschallverschweißung. Dies eröffnet eine große Freiheit in der Materialwahl des Isolators. Beispielsweise könnten dann Glaskeramiken oder Quarzglas als Materialien für den Isolator gewählt werden.

Die Erfindung soll nachfolgend anhand der Ausführungsbeispiele ohne Beschränkung hierauf beschrieben werden. Es zeigen:
- Fig. 1: eine erste Ausgestaltung der Erfindung mit einem Kontaktwerkstoff;
- Fig. 2: eine zweite Ausführungsform der Erfindung ohne Kontaktwerkstoff;
- Fig. 3: eine dritte Ausführungsform der Erfindung, wobei der im Wesentlichen stiftförmige Leiter ein Kopfteil aufweist;
- Fig. 4a+b: eine Batteriezelle mit einer erfindungsgemäßen Durchführung.

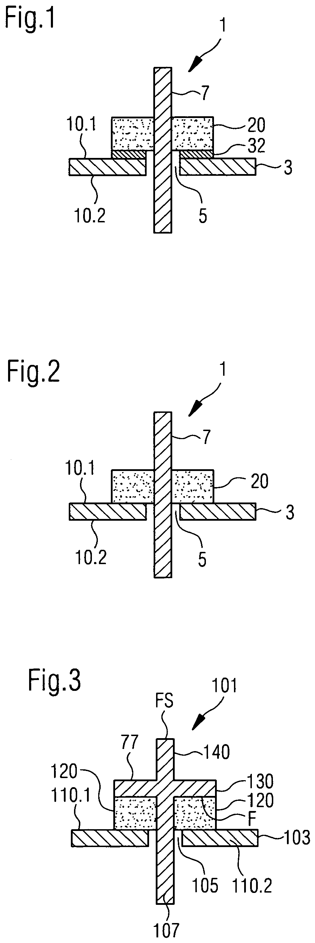

In Fig. 1 ist eine elektrische Durchführung 1 gemäß der Erfindung durch ein Gehäusebauteil 3 als Teil eines Batteriezellengehäuses dargestellt. Das Batteriezellengehäuse 3 umfasst eine Öffnung 5, durch die der Leiter, insbesondere der im Wesentlichen stiftförmige Leiter 7 der Durchführung 1 hindurchgeführt wird. Das Gehäuseteil 3 umfasst eine Innenseite 10.1 sowie eine Außenseite 10.2. Die Innenseite 10.1 des Gehäuseteils 3 ist zur Batteriezelle hin gerichtet. Der im Wesentlichen stiftförmige Leiter 5 ragt über die Außenseite 10.2 des Gehäusebauteils 3 hinaus.

Die Materialien für das Gehäusebauteil 3 sowie den Leiter, insbesondere den stiftförmigen Leiter 7, können unterschiedliche Metalle umfassen. So kann beispielsweise der Leiter, bevorzugt der im Wesentlichen stiftförmige Leiter 7, aufgrund der hohen elektrischen Leitfähigkeit aus Kupfer oder Aluminium bestehen, während beispielsweise das Gehäusebauteil 3 aus Edelstahl gefertigt sein kann, um später mit anderen Edelstahlbauteilen geschweißt zu werden. Alternativ wäre auch ein Leichtmetall für das Gehäusebauteil möglich.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise dem stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶S/m bis 50 · 10⁶S/m aus.

Bei Einsatz in Druckglasdurchführungen liegt zudem noch der Ausdehnungskoeffizient α für den Bereich 20° C bis 300° C im Bereich 18 · 10⁻⁶/K bis 30 · 10⁻⁶/K.

Im Allgemeinen haben Leichtmetalle Schmelztemperaturen im Bereich 350° C bis 800° C.

Erfindungsgemäß umfasst die Durchführung 1 neben dem im Wesentlichen stiftförmigen Leiter einen Isolator 20, der bevorzugt aus einem Glas- oder Glaskeramikmaterial bestehen kann. Der im Wesentlichen stiftförmige Leiter 7 wird mit dem Isolator, hier dem Glas- oder Glaskeramikmaterial, in einem ersten Verfahrensschritt hermetisch dicht verbunden, beispielsweise durch Verschmelzen oder Ultraschallverschweißen. Bevorzugt ist der Isolator ringförmig, z. B. ein Glasring. Obwohl der Glasring hier als ringförmig beschrieben ist, ist diese Kontur keineswegs zwingend. Vielmehr wäre es auch möglich, andere Konturen für den Isolator 20 vorzusehen, beispielsweise die eines Vieleckes. Die Freiheit in der Wahl der Kontur wird insbesondere dadurch ermöglicht, dass die Verbindung von Isolator und Gehäuse mit Hilfe von Ultraschallschweißen erfolgten kann. Nachdem die Durchführung, bestehend aus dem Leiter, insbesondere dem im Wesentlichen stiftförmigen Leiter 7 sowie dem Isolator 20, in dem der im Wesentlichen stiftförmige Leiter eingeschmolzen wird, hergestellt wurde, wird die Durchführung 1 als Ganzes mit dem Gehäusebauteil 3 verbunden, und zwar durch Verschweißen, insbesondere Ultraschallverschweißen. Wird der im Wesentlichen stiftförmige Leiter mit dem Isolator, beispielsweise dem Glasring verschmolzen, ist es erforderlich, die Materialeigenschaften des Isolators, beispielsweise des Glases bzw. Glasringes an den Werkstoff des im Wesentlichen stiftförmigen Leiters 7 anzupassen, beispielsweise in Bezug auf die Verschmelztemperatur wird auch der Isolator beispielsweise der Glasring mit dem im Wesentlichen stiftförmigen Leiter durch Ultraschallschweißen verbunden, so ist die Wahl des Materials des Isolators noch freier als im vorgenannten Fall, da dann ein Anpassen der Verschmelztemperatur des Isolators an den im Wesentlichen stiftförmigen Leiter nicht notwendig ist. Es kann dann als Material für den Isolator auch eine Glaskeramik oder Quarzglas gewählt werden. Die Verbindung der vorgefertigten Durchführung 1 mit dem Gehäusebauteil 3 erfolgt in dem in Fig. 1 dargestellten Ausführungsbeispiel durch Verschweißen mittels einer zwischen dem Isolatormaterial 20 und dem Gehäuseteil 3 liegenden Kontaktwerkstoffes 22. Durch Verwendung eines Kontaktwerkstoffs wird vorteilhafterweise erreicht, dass durch Ultraschallverschweißen der Isolator nicht nur mit einem duktilen Metall, wie beispielsweise Weichaluminium verbunden werden kann, sondern auch mit anderen insbesondere weniger duktilen Metallen, wie Edelstahl oder Kupfer.

Wird der im Wesentlichen stiftförmige Leiter mit dem Isolator durch Ultraschallschweißen verbunden, so kann der Kontaktwerkstoff, insbesondere die Aluminiumfolie um den im Wesentlichen stiftförmigen Leiter gewickelt werden (nicht dargestellt). Eine Aluminiumfolie als Kontaktwerkstoff ist insbesondere für Leiter aus Cu-Materialien von Vorteil.

Als Kontaktwerkstoff kann bevorzugt eine Aluminiumfolie dienen. Die Verschweißung des Isolators 20 der Durchführung mit dem Gehäusebauteil 3 erfolgt vorzugsweise von der Seite des Gehäusebauteils 3 her mittels einer Torsionssonotrode durch Ultraschalleinkopplung.

Als Materialien für den Leiter, insbesondere den im Wesentlichen stiftförmigen Leiter 7 kommen neben Al, einer Aluminiumlegierung, AlSiC auch Cu, CuSiC, eine Kupferlegierung,NiFe, ein NiFe-Mantel mit Kupferanteil, Silber, eine Silber- sowie eine Kobalt-Eisen-Legierung in Frage.

Als Materialien für den Isolator 20 kommen bevorzugt als Glas- oder Glaskeramikmaterialien, insbesondere Schmelzgläser bzw. Lotgläser in Frage, mit nachfolgender Zusammensetzung:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Besonders bevorzugt ist die Zusammensetzung:

| | |
|---|---|
| P₂O₅ | 38-50 mol-%, insbesondere 39-48 mol.-% |
| Al₂O₃ | 3-14 mol-%, insbesondere 4-12 mol.-% |
| B₂O₃ | 4-10 mol-%, insbesondere 4-8 mol.-% |
| Na₂O | 10-30 mol-%, insbesondere 14-20 mol.-% |
| K₂O | 10-20 mol-%, insbesondere 12-19 mol.-% |
| PbO | 0-10 mol.-%, insbesondere 0-9 mol.-% |

Die zuvor genannten Phosphatgläser weisen eine hohe Kristallisationsstabilität auf. Die hohe Kristallisationsstabilität der Phosphatgläser stellt in der Regel sicher, dass das Aufschmelzen der Gläser auch bei Temperaturen < 600° C in der Regel nicht behindert wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1 erläutert. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas, beispielsweise in Form eines Glaspulvers, aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen, wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der sogenannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ± 20 K von der Halbkugeltemperatur abweichen.

Nachfolgende Tabelle 1 kann Ausführungsbeispiele für besonders bevorzugte Phosphatgläser entnommen werden:

**Tabelle 1:**

| Ausführungsbeispiele: | | | | | | | | |
|---|---|---|---|---|---|---|---|---|
| | AB1 | AB2 | AB3 | AB4 | AB5 | AB6 | AB7 | AB8 |
| Mol-% | | | | | | | | |
| P₂O₅ | 47.6 | 43.3 | 43.3 | 43.3 | 37.1 | 40.0 | 42,0 | 46,5 |
| B₂O₃ | 7.6 | 4.8 | 4.7 | 4.8 | 4.9 | 6.0 | 6,0 | 7,6 |
| Al₂O₃ | 4.2 | 8.6 | 8.7 | 2.0 | 2 | 12.0 | 12,0 | 4,2 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α(20-300° C) (10⁻⁶/K) | 19 | 16,5 | 14,9 | 13,7 | 14,8 | 16.7 | 16,0 | 19,8 |
| Tg (°C) | 325 | 375 | 354 | 369 | 359 | 392 | 425 | 347 |
| Dichte [g/cm³] | 2,56 | | | | | 3 | 3,02 | 2,63 |
| Auslaugung In Ma-% | 18,7 | 14,11 | 7,66 | 12,63 | 1,47 | 3,7 | 29,01 | 8,43 |
| Gewichtsverlust(%) nach 70h in 70°C-Wasser | 10,7 | 0,37 | 0,1 | 0,13 | 0,13 | n.B. | 0,006/0,001 | 0.45/0,66 |

Ausführungsbeispiel 1 in Tabelle 1 ist insbesondere für Aluminium/Aluminium-Einglasungen geeignet, d.h. Einglasungen eines Aluminiumstiftes als Leiter in einen umgebenden Aluminium-Grundkörper.

Neben den Auslaugungen wurden auch die Wasserbeständigkeiten der einzelnen Gläser bestimmt.

Die Wasserbeständigkeitstests sind so erfolgt, dass Niederschmelzungen von den Gläsern gemacht wurden (2x2 cm, Höhe: -0.5 cm), die in 200 ml Wasser bei 25° C und 70° C 70 Stunden eingelagert wurden. Danach wurde der Materialverlust in Gew.% bestimmt. Und in der Tabelle angegeben.

Ausführungsbeispiel 6 in Tabelle 1 ist insbesondere für Cu/Al-Einglasungen geeignet, d.h. Einglasung eines Kupferstiftes als Leiter in einen umgebenden Aluminium-Grundkörper.

Obwohl einige der Ausführungsbeispiele einen für die Fügung mit Cu tendenziell zu niedrigen Ausdehnungskoeffizienten aufweisen, wird deutlich, dass hohe Li-Anteile in der Schmelze gelöst werden können, ohne dass das Glas mit einer derartigen Glaszusammensetzung instabil wird.

Die Ausführungsbeispiele 7 und 8 (AB7 und AB8) zeichnen sich dadurch aus, dass sie Bi₂O₃ z. B. anstelle von PbO, wie in Ausführungsbeispiel 6 (AB6), enthalten.

Überraschenderweise hat sich gezeigt, dass durch Bi₂O₃ die Wasserbeständigkeit deutlich erhöht werden kann. Durch die Einführung von 1 mol-% Bi₂O₃ würde beispielsweise eine 10-fach höhere Wasserbeständigkeit beim Ausführungsbeispiel 8 (AB8) gegenüber Ausführungsbeispiel 1 (AB1) erzielt. Bi₂O₃ kann insbesondere auch anstelle von PbO gemäß Ausführungsbeispiel 6 (AB6) verwandt werden. Wegen ihrer Umweltverträglichkeit sind Gläser, die bis auf Verunreinigungen frei von Blei sind bevorzugt. Bis auf Verunreinigungen frei von bedeutet, das die Zusammensetzung weniger als 100 ppm, insbesondere weniger als 10 ppm, besonders bevorzugt weniger als 1 ppm des Stoffes, beispielsweise Blei enthält.

In Tabelle 1 ist die Zusammensetzung in mol-% angegeben, die Transformationstemperatur Tg, wie Sie beispielsweise in "Schott Guide to Glass, second edition, 1996, Chapman&Hall, Seiten 18-21 definiert ist, die Gesamtauslaugung in Massenprozent (Ma -%), der Ausdehnungskoeffizient CTE beziehungsweise α in 10⁻⁶K⁻¹ bei 20°C sowie die Dichte in g/cm³ Die Gesamtauslaugung wie nachfolgend beschrieben bestimmt. Zunächst wird die Glaszusammensetzungen zu Glaspulver mit einer Körnung d50 = 10µm gemahlen, für eine Woche dem Elektrolyten bestehend aus Ethylencarbonat/Dimethylcarbonat im Verhältnis 1:1 mit darin gelöstem 1molaren LiPF₆ als Leitsalz ausgesetzt und nach dieser Zeit der Elektrolyt bestehend aus Ethylcarbonat/Dimethylcarbonat im Verhältnis 1:1 mit darin gelösten 1 molaren LiPF₆ als Leitsalz auf Glasbestandteile, die aus dem Glas ausgelaugt wurden, untersucht. In vorausgegangener Tabelle 1 bezeichnet n. b. nicht bekannte Eigenschaften.

In Fig. 2 ist eine alternative Ausführungsform zu Fig. 1 dargestellt, wobei in der Ausgestaltung gemäß Fig. 2 kein Kontaktwerkstoff eingesetzt wird. Gleiche Bauteile wie in Fig. 1 sind mit denselben Bezugsziffern belegt.

Eine Ausgestaltung ohne die Verwendung einer Kontaktfolie, wie in Fig. 1 dargestellt, kommt insbesondere dann in Frage, wenn der Leiter, insbesondere der im Wesentlichen stiftförmige Leiter 7 bzw. insbesondere das Gehäusebauteil 3 aus Aluminium besteht. In einem solchen Fall kann auf eine zusätzliche Schicht verzichtet werden, da die zu verschweißenden Metalle duktile Metalle sind. Das Herstellverfahren ist wiederum wie bei Fig. 1, d. h. zunächst wird der stiftförmige Leiter mit dem Isolator, insbesondere dem Glas- oder Glaskeramikmaterial, verschmolzen oder auch durch Ultraschallverschweißen und anschließend an die Herstellung der Durchführung aus dem im Wesentlichen stiftförmigen Leiter und dem Isolator 20 die gesamte Durchführung mit dem Gehäusebauteil 3 durch ein Schweißverfahren, insbesondere Ultraschallverschweißen verbunden. Im Gegensatz zu Fig. 1 erfolgt somit eine direkte Verschweißung des Isolators 20 mit der Innenseite 10.1 des Gehäusebauteils 3. Die Seite 10.2 des Gehäusebauteils stellt die Außenseite dar, die Seite 10.1 die Innenseite, d.h. die Seite, die bei Ausgestaltung des Gehäusebauteils als Teil eines Batteriezellengehäuses in das Innere der Batterie, d.h. zur Batteriezelle hin, gerichtet ist. Wiederum wird der im Wesentlichen stiftförmige Leiter 7 durch die Öffnung 5 in dem Gehäusebauteil 3 nach außen geführt.

In Fig. 3 ist eine alternative Ausgestaltung der Erfindung gezeigt. Bei der Ausgestaltung gemäß Fig. 3 sind gleiche Bauteile wie in Fig. 1 und 2 mit um 100 erhöhten Bezugsziffern bezeichnet. Die Durchführung 101 umfasst nunmehr einen im Wesentlichen stiftförmigen Leiter mit einem Kopfteil 130. Die Fläche F des Kopfteils ist wesentlich größer als die Fläche FS des im Wesentlichen stiftförmigen Leiters 7.

Im Gegensatz zur Ausgestaltung gemäß Fig. 1 und Fig. 2 ist erfindungsgemäß der Isolator, insbesondere das Glas- oder Glaskeramikmaterial 120, bei Fig. 3 zwischen die Fläche F des Kopfteils 130 des im Wesentlichen stiftförmigen Leiters 107 und der Innenseite 110.1 des Gehäuseteils eingebracht.

Der Leiter, insbesondere der im Wesentlichen stiftförmige Leiter gemäß Fig. 3 mit einem Kopfteil 130 hat den Vorteil, dass im Bereich des Kopfteils Elektrodenverbindungsbauteile angebracht werden können, beispielsweise durch Anliegen an der Innenfläche, d.h. der zur Batteriezelle hin gerichteten Fläche FI des Kopfteils 130. Der über das Kopfteil 130 des stiftförmigen Leiters 107 hinausragende Fortsatz 140 kann für ein Elektrodenverbindungsteil, beispielsweise als Zentrierung bzw. Verdrehsicherung, eingesetzt werden. Das nicht dargestellte Elektrodenverbindungssteil, das mit dem Kopfteil des im Wesentlichen stiftförmigen Leiters 107 verbunden wird, ist in der Batteriezelle an die Kathode bzw. Anode angeschlossen. Im Gegensatz zur Ausgestaltung gemäß den Fig. 1 und 2 kann die erfindungsgemäße Durchführung mit dem Gehäuseteil derart verbunden werden, dass zunächst der Isolator 120, insbesondere in Form eines ringförmigen Isolators, bevorzugt eines Glasringes, mit dem Gehäusebauteil 103 wird, beispielsweise gemäß herkömmlichen Verfahren, verschmolzen oder durch Ultraschallschweißen verbunden wird. Anschließend an das Verschmelzen oder Verschweißen des Isolators 120 mit der Gehäuseaußenseite 110 wird der im Wesentlichen stiftförmige Leiter 107 durch die Öffnung 105 im Gehäusebauteil 103 sowie die Öffnung im Glasring 120 hindurchgeführt. Anschließend an das Hindurchführen durch die Öffnung im Glasring 120 und im Gehäusebauteil 103 wird der im Wesentlichen stiftförmige Leiter 107 insbesondere im Bereich der Innenfläche F des Kopfteils mit dem Glasring 120 durch Schweißen, insbesondere Ultraschallschweißen, verbunden. Wie zuvor ausgeführt ist das Verschweißen sowohl von Leiter mit Isolator als auch von Isolator mit Gehäusebauteil vorteilhaft, da die Materialien insbesondere für den Isolator sehr frei ausgewählt werden können. Insbesondere sind auch Quarzglas und Glaskeramik als Materialien möglich.

Neben Gläsern und Glaskeramikmaterialien können als Isolatoren bei den erfindungsgemäßen Durchführungen auch Keramikmaterialien verwandt werden. Bei der Verwendung von Keramiken werden diese bevorzugt mittels eines metallischen Lotes mit dem Gehäusebauteil oder dem im Wesentlichen stiftförmigen Leiter verbunden.

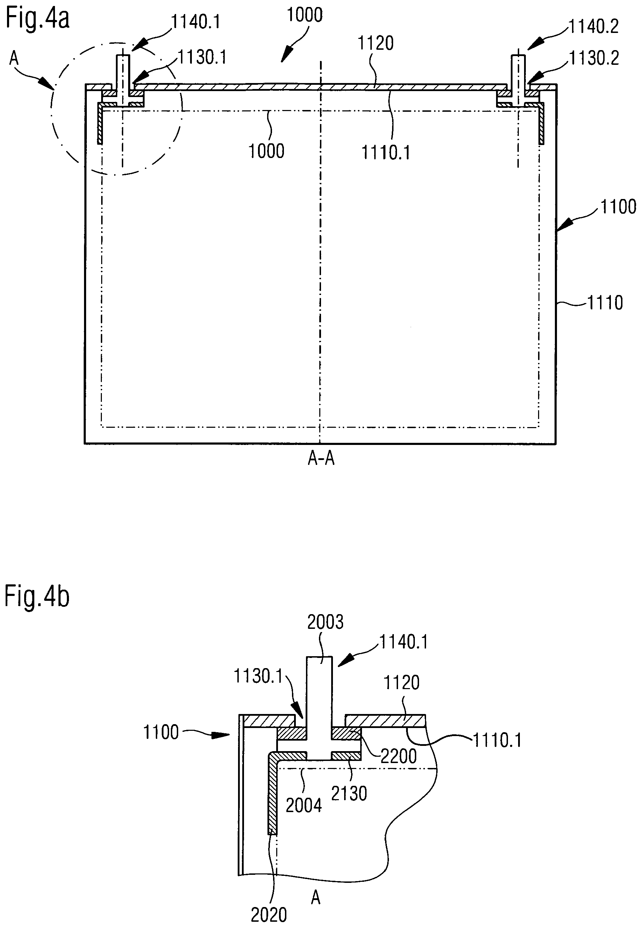

In den Figuren 4a und 4b sind komplette Batteriezellen dargestellt, mit eingesetzten Durchführungen. Hierbei zeigen die Figuren 4a-4b eine Ausgestaltung, wobei der im Wesentlichen stiftförmige Leiter ein Kopfteil aufweist.

In Figur 4a ist der prinzipielle Aufbau einer Batteriezelle 1000 dargestellt.

Die Batteriezelle 1000 weist ein Gehäuse 1100 mit Seitenwänden 1110 und einem Deckelteil 1120 auf. In das Deckelteil 1120 des Gehäuses 1100 sind Öffnungen 1130.1, 1130.2 eingelassen beispielsweise durch Stanzen. Durch die beiden Öffnungen 1130.1, 1130.2 werden die im Wesentlichen stiftförmigen Leiter 1140.1, 1140.2 der Durchführungen hindurchgeführt.

Detailliert zeigt Figur 4b den Ausschnitt des Batteriedeckels 1120 mit der Öffnung 1130.1, und darin eingesetzter Durchführung 1140.1.

Die Durchführung 1140.1 umfasst einen stiftförmigen Leiter 2003 sowie einen Grundkörper beziehungsweise Isolator. Der Grundkörper 2200 beziehungsweise Isolator ist vorliegend ringförmig, insbesondere als Glas- oder Glaskeramikring ausgebildet. Der stiftförmige Leiter 2003 mit einem Kopfteil ist mit dem Grundkörper 2200 durch Verschmelzen oder Verschweißen mittels Ultraschall verbunden. Der stiftförmige Leiter 2003 wird nach dem Verbinden durch Verschmelzen oder Verschweißen mittels Ultraschall des Grundkörpers 2200 mit dem stiftförmigen Leiter 2003 durch die Öffnung 1130.1 des Gehäuses 1100 hindurchgeführt. Anschließend wird der Grundkörper beziehungsweise Isolator 2200 mit der Innenseite 1110.1 des Gehäuses 1100 im Bereich des Deckelteiles 1120 durch Verschmelzen oder Verschweißen mittels Ultraschall verbunden.

Mit dem Kopfteil 2130 des im Wesentlichen stiftförmigen Leiters kann ein Elektrodenverbindungsteil 2020 (z. B. durch Schweißen, insbesondere Laserschweißen, Widerstandsschweißen, Elektronenstahlschweißen, Reibschweißen, Ultraschallschweißen) verbunden sein. Das Elektrodenverbindungsteil 2020 wiederum dient dem Anschluss an entweder an die Kathode oder Anode der elektrochemischen Zelle 2004 der Batterie 1000. Die elektrochemische Zelle der Lithium-Ionen-Batterie wird auch als Batteriezelle 2004 bezeichnet. Das Gehäuse 1100, das die Batteriezelle 2004 umgibt, ist als Batteriezellengehäuse ausgebildet.

Durch die erfindungsgemäße flache Bauweise des stiftförmigen Leiters mit Kopfteil, wie in den Fig. 4a und 4b gezeigt, gelingt es, den nicht ausgenutzten Bauraum in dem Batteriezellengehäuse zu minimieren.

Materialien für den leiter sind insbesondere Metalle, bevorzugt Aluminium, AlSiC, Kupfer, CuSiC, Magnesium, Silber, Gold, eine Aluminiumlegierung, eine Magnesiumlegierung, eine Kupferlegierung, eine Silberlegierung, eine Goldlegierung oder NiFe-Legierungen.

Der Grundkörper und/oder das Gehäusebauteil umfassen bevorzugt ein Leichtmetall, Edelstahl, stahl, nichtrostenden Stahl, insbesondere Aluminium, AlSiC, eine Aluminiumlegierung, Magnesium, eine Magnesiumlegierung, Titan oder eine Titanlegierung.

Mit einer Ausgestaltung der stiftförmigen Leiter mit einem Kopfteil und den damit verbundenen Elektroden-Verbindungsbauteilen wird eine sehr hohe Stabilität, insbesondere auch gegen mechanische Belastung wie Vibrationen erreicht. Gemeinsam ist all den in dieser Anmeldung dargestellten Ausführungsformen, dass eine Anpassung des Isolators sowohl an den Werkstoff des im Wesentlichen stiftförmigen Leiters als auch an das Gehäusebauteil nicht mehr erforderlich ist. Aufgrund der beim Ultraschallschweißen auftretenden niedrigen Temperaturen ist es insbesondere möglich, Komponenten mit deutlich unterschiedlicher thermischer Ausdehnung und/oder Schmelztemperatur zu verbinden. Auch das Benetzungsverhalten des geschmolzenen Glases spielt zumindest an einem der Kontaktwerkstoffe, an der keine Verschmelzung stattfindet, nur eine untergeordnete Rolle. Aus der Verbindung mittels Ultraschallschweißen ergeben sich somit Freiheiten betreffend die Wahl der Materialien sowie Freiheiten bei der Auswahl des Isolators, insbesondere des Glas- oder Glaskeramikmaterials. Insbesondere ist es möglich, Glas- bzw. Glaskeramikmaterialien zu verwenden, die eine Resistenz gegen Medien, beispielsweise die Elektrolyten der Batteriezelle, aufweisen.

Als besonderes Einsatzgebiet für die dargestellten Durchführungen sind insbesondere elektrische Durchführungen für Batterien, insbesondere Lithium-Ionen-Batterien, geeignet.

Mit der Durchführung gemäß der Erfindung kann ein Batteriegehäuse zur Verfügung gestellt werden, das hermetisch dicht ist auch bei einer Verformung des Batteriegehäuses im Gegensatz zu Kunststoffdurchführungen, die zur Rissbildung neigen. Hierdurch wird bei Batterien mit Batteriegehäusen, die eine erfindungsgemäße Durchführung aufweisen, insbesondere eine hohe Feuerbeständigkeit bei Fahrzeugunfällen zur Verfügung gestellt. Dies ist insbesondere bei einem Einsatz von Batterien, bevorzugt Li-Ionen-Batterien, im Automobilbereich von Bedeutung.

## Patentansprüche

1. Durchführung (1), durch ein Gehäusebauteil eines Gehäuses, insbesondere eines Batteriegehäuses, beziehungsweise Batteriezellengehäuses, mit einer Innenseite (10.1) und einer Außenseite (10.2), wobei die Durchführung umfasst:
- ein Gehäusebauteil) aus einem Leichtmetall mit wenigstens einer Öffnung (5, 105, 1130.1, 1130.2)
- wenigstens einen Leiter, bevorzugt einen im Wesentlichen stiftförmigen Leiter (7, 107, 1140.1, 1140.2), der durch die Öffnung hindurchgeführt ist,
- ein Glas- oder Glaskeramikmaterial (20, 120, 2200), das den Leiter wenigstens teilweise umgibt,
**dadurch gekennzeichnet, dass**
das Glas- oder Glaskeramikmaterial direkt mit der Innenseite (10.1) des Gehäusebauteils mittels einer Ultraschallschweißverbindung ohne Kontaktwerkstoff verbunden ist, wobei die Innenseite (10.1) die Seite des Gehäusebauteiles ist, die bei Ausgestaltung des Gehäusebauteiles als Teil eines Batteriegehäuses in das Innere der Batterie gerichtet ist.

2. Durchführung nach Anspruch 1,
**dadurch gekennzeichnet, dass**
der Leiter, bevorzugt der im Wesentlichen stiftförmige Leiter (107) ein Kopfteil (130) umfasst und das Glas- oder Glaskeramikmaterial (120), zwischen Kopfteil (130) und Gehäusebauteil (103) eingebracht ist.

3. Durchführung nach Anspruch 2,
**dadurch gekennzeichnet dass**,
die Verbindung zwischen einer Innenfläche F des Kopfteils und dem Glas- oder Glaskeramikmaterial eine direkte Ultraschallschweißverbindung ohne Kontaktwerkstoff ist.

4. Durchführung nach einem der Ansprüche 1 bis 3,
**dadurch gekennzeichnet, dass**
der Leiter, bevorzugt der im Wesentlichen stiftförmige Leiter (7, 107) als Material, insbesondere ein Metall, bevorzugt Cu, CuSiC, eine Kupferlegierung, Al oder AlSiC, eine Aluminiumlegierung, NiFe, ein NiFe-Mantel mit Kupferanteil, Magnesium oder eine Magnesiumlegierung, Silber, eine Silberlegierung, Gold, eine Goldlegierung sowie eine Kobald-Eisen-Legierung ist.

5. Durchführung nach einem der Ansprüche 1 bis 4,
**dadurch gekennzeichnet, dass**
das Glas- oder Glaskeramikmaterial die nachfolgenden Komponenten umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-29 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%,bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 0-5 mol-%. Bevorzugt 2-5 mol-%. |

6. Durchführung nach Anspruch 5,
**dadurch gekennzeichnet, dass**
Glas- oder Glaskeramikmaterial die nachfolgenden Komponenten umfasst:
| | |
|---|---|
| P₂O₅ | 38-50 mol-% |
| Al₂O₃ | 3-14 mol-% |
| B₂O₃ | 4-10 mol-% |
| Na₂O | 10-30 mol-% |
| K₂O | 10-20 mol-% |
| PbO | 0-10 mol-% |
| ist. | |

7. Durchführung nach einem der Ansprüche 1 bis 6,
**dadurch gekennzeichnet, dass**
das Gehäusebauteil aus einem Leichtmetall Aluminium , AlSIC, eine Aluminiumlegierung, Magnesium oder eine Magnesiumlegierung, Titan oder eine Titanlegierung umfasst.

8. Gehäuse (3, 1100), insbesondere für eine Batteriezelle (2004), umfassend wenigstens
eine Durchführung (1) nach einem der Ansprüche 1 bis 7.

9. Gehäuse nach Anspruch 8,
**dadurch gekennzeichnet, dass**
das Gehäuse ein Metall, insbesondere ein Leichtmetall, bevorzugt Aluminium, eine Aluminiumlegierung, Magnesium, eine Magnesiumlegierung, Titan, eine Titanlegierung, Stahl, Edelstahl, nicht rostenden Stahl oder Werkzeugstahl, umfasst.

10. Elektrische Speichereinrichtung, insbesondere Akkumulator, bevorzugt Lilonen-Batterie mit wenigstens einer Batteriezelle (2004), die von einem Gehäuse, insbesondere einem Batteriezellengehäuse (1100) umschlossen wird, wobei das Gehäuse (1100) wenigstens eine Öffnung (1130.1, 1130.2) umfasst durch die wenigstens ein Leiter, insbesondere ein im Wesentlichen stiftförmiger Leiter (7, 107, 1130.1, 1130.2) in einer Durchführung gemäß einem der Ansprüche 1 bis 7 hindurchgeführt wird.

11. Elektrische Speichereinrichtung nach Anspruch 10,
**dadurch gekennzeichnet, dass**
das Gehäuse ein Metall, Edelstahl, Stahl, nicht rostenden Stahl, Werkzeugstahl, ein Leichtmetall, insbesondere Aluminium, AlSiC, eine Aluminiumlegierung, Magnesium, eine Magnesiumlegierung, Titan oder eine Titanlegierung umfasst.

12. Verfahren zum Versehen eines Gehäusebauteils aus einem Leichtmetall, das eine Innenseite (10.1) aufweist, mit einer Durchführung, nach einem der Ansprüche 1 bis 7, umfassend die folgenden Schritte:
a. es wird ein Leiter, insbesondere ein im Wesentlichen stiftförmiger Leiter (7, 107, 1140.1, 1140.2) mit einem Glas- oder Glaskeramikmaterial (20, 120, 2200), verschmolzen oder mittels Ultraschallschweißen direkt ohne Kontaktwerkstoff dazwischen verbunden, ergebend die Durchführung (1);
b. das Glas- oder Glaskeramikmaterial der Durchführung (1) wird mit der Innenseite (10.1) des Gehäusebauteils (3, 1120) mittels Ultraschallschweißen direkt ohne Kontaktwerkstoff dazwischen verbunden, bevorzugt hermetisch dicht.

13. Verfahren zum Versehen eines Gehäusebauteils aus einem Leichtmetall, das eine Innenseite (10.1) aufweist, mit einer Durchführung, nach einem der Ansprüche 1 bis 6, umfassend die folgenden Schritte:
c. es wird ein Glas- oder Glaskeramikmaterial mit der Innenseite (10.1) des Gehäusebauteils (103) mittels Ultraschallschweißen direkt ohne Kontaktwerkstoff dazwischen verbunden;
d. es wird ein Leiter, insbesondere ein im Wesentlichen stiftförmiger Leiter (107) mit dem Glas- oder Glaskeramikmaterial mittels Ultraschallschweißen verbunden, bevorzugt hermetisch dicht.

14. Verfahren nach Anspruch 13,
**dadurch gekennzeichnet, dass**
der Leiter, insbesondere der im Wesentlichen stiftförmige Leiter (107) ein Kopfteil (130, 2130) aufweist und das Kopfteil (130, 2130) mit dem Glas- oder Glaskeramikmaterial durch Ultraschallschweißen direkt ohne Kontaktwerkstoff dazwischen verbunden wird.

## Claims

1. Feed-through (1), through a housing component of a housing, in particular of a battery housing, or battery cell housing, having an inner side (10.1) and an outer side (10.2), wherein the feed-through comprises:
- a housing component which is made of a light metal and has at least one opening (5, 105, 1130.1, 1130.2),
- at least one conductor, preferably a substantially pin-shaped conductor (7, 107, 1140.1, 1140.2), which is fed through the opening,
- a glass or glass-ceramic material (20, 120, 2200) which at least partially surrounds the conductor,
**characterized in that**
the glass or glass-ceramic material is joined directly to the inner side (10.1) of the housing component by means of an ultrasonic welded join, without any contact material, wherein the inner side (10.1) is the side of the housing component that is directed into the interior of the battery when the housing component is configured as part of a battery housing.

2. Feed-through according to claim 1,
**characterized in that**
the conductor, preferably the substantially pin-shaped conductor (107), comprises a head part (130) and the glass or glass-ceramic material (120) is introduced between the head part (130) and the housing component (103).

3. Feed-through according to claim 2,
**characterized in that**
the join between an inner face F of the head part and the glass or glass-ceramic material is a direct ultrasonic welded join without any contact material.

4. Feed-through according to one of claims 1 to 3,
**characterized in that**
the conductor, preferably the substantially pin-shaped conductor (7, 107), is as a material, in particular a metal, preferably Cu, CuSiC, a copper alloy, Al or AlSiC, an aluminium alloy, NiFe, a NiFe sheath with copper contained therein, magnesium or a magnesium alloy, silver, a silver alloy, gold, a gold alloy, and a cobalt-iron alloy.

5. Feed-through according to one of claims 1 to 4,
**characterized in that**
the glass or glass-ceramic material comprises the following components:
| | |
|---|---|
| P₂O₅ | 35-50 mol%, in particular 39-48 mol% |
| Al₂O₃ | 0-14 mol%, in particular 2-12 mol% |
| B₂O₃ | 2-10 mol%, in particular 4-8 mol% |
| Na₂O | 0-30 mol%, in particular 0-29 mol% |
| M₂O | 0-20 mol%, in particular 12-20 mol%, wherein M may be K, Cs, Rb |
| PbO | 0-10 mol%, in particular 0-9 mol% |
| Li₂O | 0-45 mol%, in particular 0-40 mol%, preferably 17-40 mol% |
| BaO | 0-20 mol%, in particular 0-20 mol%, preferably 5-20 mol% |
| Bi₂O₃ | 0-10 mol%, in particular 0-5 mol%. Preferably 2-5 mol%. |

6. Feed-through according to claim 5,
**characterized in that**
glass or glass-ceramic material comprises is the following components:
| | |
|---|---|
| P₂O₅ | 38-50 mol% |
| Al₂O₃ | 3-14 mol% |
| B₂O₃ | 4-10 mol% |
| Na₂O | 10-30 mol% |
| K₂O | 10-20 mol% |
| PbO | 0-10 mol%. |

7. Feed-through according to one of claims 1 to 6,
**characterized in that**
the housing component comprises of a light metal aluminium, AISIC, an aluminium alloy, magnesium or a magnesium alloy, titanium or a titanium alloy.

8. Housing (3, 1100), in particular for a battery cell (2004), comprising at least one feed-through (1) according to one of claims 1 to 7.

9. Housing according to claim 8,
**characterized in that**
the housing comprises a metal, in particular a light metal, preferably aluminium, an aluminium alloy, magnesium, a magnesium alloy, titanium, a titanium alloy, steel, stainless steel, rustproof steel or tool steel.

10. Electrical storage device, in particular an accumulator, preferably a Li-ion battery having at least one battery cell (2004) which is enclosed by a housing, in particular a battery cell housing (1100), wherein the housing (1100) comprises at least one opening (1130.1, 1130.2), through which at least one conductor, in particular a substantially pin-shaped conductor (7, 107, 1130.1, 1130.2) is fed in a feed-through according to one of claims 1 to 7.

11. Electrical storage device according to claim 10,
**characterized in that**
the housing comprises a metal, stainless steel, steel, rustproof steel, tool steel, a light metal, in particular aluminium, AlSiC, an aluminium alloy, magnesium, a magnesium alloy, titanium or a titanium alloy.

12. Method for providing a housing component made of a light metal, which has an inner side (10.1), with a feed-through according to one of claims 1 to 7, comprising the following steps:
a. a conductor, in particular a substantially pin-shaped conductor (7, 107, 1140.1, 1140.2), is fused to a glass or glass-ceramic material (20, 120, 2200) or is joined directly thereto by means of ultrasonic welding, without any contact material therebetween, so as to create the feed-through (1);
b. the glass or glass-ceramic material of the feed-through (1) is joined directly to the inner side (10.1) of the housing component (3, 1120) by means of ultrasonic welding, without any contact material therebetween, preferably in a hermetically sealed manner.

13. Method for providing a housing component made of a light metal, which has an inner side (10.1), with a feed-through according to one of claims 1 to 6, comprising the following steps:
c. a glass or glass-ceramic material is joined directly to the inner side (10.1) of the housing component (103) by means of ultrasonic welding, without any contact material therebetween;
d. a conductor, in particular a substantially pin-shaped conductor (107), is joined to the glass or glass-ceramic material by means of ultrasonic welding, preferably in a hermetically sealed manner.

14. Method according to claim 13,
**characterized in that**
the conductor, in particular the substantially pin-shaped conductor (107), has a head part (130, 2130) and the head part (130, 2130) is joined directly to the glass or glass-ceramic material by means of ultrasonic welding, without any contact material therebetween.

## Revendications

1. Traversée (1), à travers un élément de boîtier d'un boîtier, en particulier d'un boîtier de batterie, ou d'un boîtier de cellule de batterie, ayant un côté intérieur (10.1) et un côté extérieur (10.2), la traversée comprenant :
- un élément de boîtier en métal léger ayant au moins une ouverture (5, 105, 1130.1, 1130.2),
- au moins un conducteur, de préférence un conducteur sensiblement en forme de broche (7, 107, 1140.1, 1140.2), qui est passé à travers l'ouverture,
- un matériau vitreux ou vitrocéramique (20, 120, 2200) qui entoure au moins partiellement le conducteur,
**caractérisée en ce que**
le matériau vitreux ou vitrocéramique est directement relié au côté intérieur (10.1) de l'élément de boîtier au moyen d'une liaison soudée par ultrasons sans matériau de contact, le côté intérieur (10.1) étant le côté de l'élément de boîtier qui, lorsque l'élément de boîtier est conçu comme faisant partie d'un boîtier de batterie, est dirigé vers l'intérieur de la batterie.

2. Traversée selon la revendication 1,
**caractérisée en ce que**
le conducteur, de préférence le conducteur sensiblement en forme de broche (107), comprend une partie tête (130) et le matériau vitreux ou vitrocéramique (120) est introduit entre la partie tête (130) et l'élément de boîtier (103).

3. Traversée selon la revendication 2,
**caractérisée en ce que**
la liaison entre une surface intérieure F de la partie tête et le matériau vitreux ou vitrocéramique est une liaison soudée par ultrasons directe sans matériau de contact.

4. Traversée selon l'une des revendications 1 à 3,
**caractérisée en ce que**
le conducteur, de préférence le conducteur sensiblement en forme de broche (7, 107) est, en tant que matériau, en particulier un métal, de préférence Cu, CuSiC, un alliage de cuivre, Al ou AlSiC, un alliage d'aluminium, NiFe, une gaine NiFe avec une proportion de cuivre, du magnésium ou un alliage de magnésium, de l'argent, un alliage d'argent, de l'or, un alliage d'or ainsi qu'un alliage cobalt-fer.

5. Traversée selon l'une des revendications 1 à 4,
**caractérisée en ce que**
le matériau vitreux ou vitrocéramique comprend les composants suivants :
| | |
|---|---|
| P₂O₅ | 35 à 50 % en moles, en particulier 39 à 48 % en moles |
| Al₂O₃ | 0 à 14 % en moles, en particulier 2 à 12 % en moles |
| B₂O₃ | 2 à 10 % en moles, en particulier 4 à 8 % en moles |
| Na₂O | 0 à 30 % en moles, en particulier 0 à 29 % en moles |
| M₂O | 0 à 20 % en moles, en particulier 12 à 20 % en moles, où M peut être K, Cs, Rb |
| PbO | 0 à 10 % en moles, en particulier 0 à 9 % en moles |
| Li₂O | 0 à 45 % en moles, en particulier 0 à 40 % en moles, de préférence 17 à 40 % en moles |
| BaO | 0 à 20 % en moles, en particulier 0 à 20 % en moles, de préférence 5 à 20 % en moles |
| Bi₂O₃ | 0 à 10 % en moles, en particulier 0 à 5 % en moles, de préférence 2 à 5 % en moles. |

6. Traversée selon la revendication 5,
**caractérisée en ce que**
le matériau vitreux ou vitrocéramique comprend les composants suivants :
| | |
|---|---|
| P₂O₅ | 38 à 50 % en moles |
| Al₂O₃ | 3 à 14 % en moles |
| B₂O₃ | 4 à 10 % en moles |
| Na₂O | 10 à 30 % en moles |
| K₂O | 10 à 20 % en moles |
| PbO | 0 à 10 % en moles. |

7. Traversée selon l'une des revendications 1 à 6,
**caractérisée en ce que**
l'élément de boîtier en métal léger comprend de l'aluminium, AlSiC, un alliage d'aluminium, du magnésium ou un alliage de magnésium, du titane ou un alliage de titane.

8. Boîtier (3, 1100), en particulier pour une cellule de batterie (2004), comprenant au moins une traversée (1) selon l'une des revendications 1 à 7.

9. Boîtier selon la revendication 8,
**caractérisé en ce que**
le boîtier comprend un métal, en particulier un métal léger, de préférence de l'aluminium, un alliage d'aluminium, du magnésium, un alliage de magnésium, du titane, un alliage de titane, de l'acier, de l'acier noble, de l'acier inoxydable ou de l'acier à outils.

10. Dispositif de stockage électrique, en particulier accumulateur, de préférence batterie Li-ion, comportant au moins une cellule de batterie (2004) qui est entourée par un boîtier, en particulier un boîtier de cellule de batterie (1100), le boîtier (1100) comprenant au moins une ouverture (1130.1, 1130.2) par laquelle au moins un conducteur, en particulier un conducteur sensiblement en forme de broche (7, 107, 1130.1, 1130.2) est passé à travers une traversée selon l'une des revendications 1 à 7.

11. Dispositif de stockage électrique selon la revendication 10,
**caractérisé en ce que**
le boîtier comprend un métal, de l'acier noble, de l'acier, de l'acier inoxydable, de l'acier à outils, un métal léger, en particulier de l'aluminium, AlSiC, un alliage d'aluminium, du magnésium, un alliage de magnésium, du titane ou un alliage de titane.

12. Procédé pour munir un élément de boîtier en métal léger qui présente un côté intérieur (10.1) d'une traversée selon l'une des revendications 1 à 7, comprenant les étapes suivantes :
a. un conducteur, en particulier un conducteur sensiblement en forme de broche (7, 107, 1140.1, 1140.2) est fondu avec un matériau vitreux ou vitrocéramique (20, 120, 2200) ou relié à celui-ci par soudage par ultrasons directement, sans matériau de contact entre eux, ce qui donne la traversée (1) ;
b. le matériau vitreux ou vitrocéramique de la traversée (1) est soudé par ultrasons avec le côté intérieur (10.1) du corps (3, 1120) directement, sans matériau de contact entre eux, de préférence de manière hermétiquement étanche.

13. Procédé pour munir un élément de boîtier en métal léger qui présente un côté intérieur (10.1) d'une traversée selon l'une des revendications 1 à 6, comprenant les étapes suivantes :
c. un matériau vitreux ou vitrocéramique est relié au côté intérieur (10.1) de l'élément de boîtier (103) par soudage par ultrasons directement, sans matériau de contact entre eux ;
d. un conducteur, en particulier un conducteur sensiblement en forme de broche (107), est relié au matériau vitreux ou vitrocéramique par soudage par ultrasons, de préférence de manière hermétiquement étanche.

14. Procédé selon la revendication 13,
**caractérisé en ce que**
le conducteur, en particulier le conducteur sensiblement en forme de broche (107), présente une partie tête (130, 2130) et la partie tête (130, 2130) est reliée au matériau vitreux ou vitrocéramique par soudage par ultrasons directement, sans matériau de contact entre eux.
